# EUROPÄISCHE PATENTSCHRIFT

(11) **EP 1 749 368 B1**
(45) Veröffentlichungstag und Bekanntmachung des Hinweises auf die Patenterteilung: **26.09.2007**
(21) Anmeldenummer: 05756806.5
(22) Anmeldetag: 19.05.2005
(51) Int. Cl.: H04L 12/14

(54) **ANORDNUNG ZUM ERSTELLEN VON DIENSTORIENTIERTEN GEBÜHRENDATEN IN EINEM KOMMUNIKATIONSNETZ**
ARRANGEMENT FOR CREATING SERVICE-ORIENTED BILLING DATA IN A COMMUNICATIONS NETWORK
DISPOSITIF PERMETTANT DE CREER DES DONNEES DE TAXATION ORIENTEES SERVICE DANS UN RESEAU DE COMMUNICATION

(30) Priorität: 26.05.2004 DE 102004026140
(43) Veröffentlichungstag der Anmeldung: 07.02.2007
(73) Patentinhaber: NOKIA SIEMENS NETWORKS GMBH & CO. KG, 81541 München (DE)
(72) Erfinder: FÖLL, Uwe, 14812 Falkensee (DE)
(86) Internationale Anmeldenummer: PCT/DE2005/000962
(87) Internationale Veröffentlichungsnummer: WO 2005/117341

(56) Entgegenhaltungen:
- WO-A-20/04036825
- WO-A-20/04036890
- ANONYMOUS: "AP 6.2 Service oriented and Convergent Charging - Analysis Paper" 3GET: 3G EVOLVING TECHNOLOGIES, [Online] Juni 2004 (2004-06), XP002350904 Gefunden im Internet: URL:http://www.mobile-accounting.org/docum ents/index.php> [gefunden am 2005-10-24]
- VAN LE M ET AL: "A service component-based accounting and charging architecture to support interim mechanisms across multiple domains" NETWORK OPERATIONS AND MANAGEMENT SYMPOSIUM, 2004. NOMS 2004. IEEE/IFIP SEOUL, KOREA APRIL 19-23, 2004, PISCATAWAY, NJ, USA,IEEE, Bd. 1, 19. April 2004 (2004-04-19), Seiten 555-568, XP010712703 ISBN: 0-7803-8230-7
- CHEN C-Y ET AL: "Billing service based on TINA concepts for the next generation network" INTELLIGENT NETWORK WORKSHOP, 2001 IEEE 6-9 MAY 2001, PISCATAWAY, NJ, USA,IEEE, 6. Mai 2001 (2001-05-06), Seiten 320-324, XP010538428 ISBN: 0-7803-7047-3
- ARTIGES D ET AL: "TMN based accounting management architecture" IEE, 12. November 1996 (1996-11-12), Seiten 11-1, XP006509511
- ZSEBY S ZANDER G CARLE FRAUNHOFER FOKUS T: "Policy-based Accounting" IETF STANDARD-WORKING-DRAFT, INTERNET ENGINEERING TASK FORCE, IETF, CH, Nr. 5, August 2002 (2002-08), XP015030177 ISSN: 0000-0004

## Beschreibung

Die vorliegende Erfindung betrifft eine Anordnung zum Erstellen von dienstorientierten Gebührendaten für mindestens einen Dienst in einem Kommunikationsnetz. Die Anordnung umfasst dabei in mindestens einem ersten Bereich, einer sogenannten Gebührenerfassungsdomäne Netzelemente zur Gebührenerfassung, im Folgenden als Gebührenerfassungspunkte bezeichnet und in mindestens einem zweiten Bereich, einer sogenannten Gebührenverarbeitungsdomäne Netzelemente zur Gebührenverarbeitung, im Folgenden als Gebührenverarbeitungspunkte bezeichnet.

Bisher basierte eine Gebührenerfassung für Dienste in Kommunikationsnetzen auf einer weitestgehend unabhängigen und nicht synchronisierten Erfassung von einer für den Dienst erforderlichen Ressourcennutzung durch die an der Durchführung bzw. Erbringung des Dienstes beteiligten Netzelemente. Sich daraus ergebende bzw. gesammelte oder erfasste Gebührendaten werden im Anschluss an die Nutzung in dafür vorgesehenen Netzelementen zur Erstellung einer dienstorientierten Rechnung zusammengeführt. Bei einem sogenannten Pre-Paid-Verfahren muss die beschriebene Gebührenerfassung während der Ressourcenutzung erfolgen.

Um die beschriebene Gebührenerfassung durchführen zu können, müssen alle an der Gebührenerfassung beteiligten Netzelemente über eine eindeutige Korrelationskennung verfügen. Diese Korrelationskennung identifiziert eindeutig alle Gebührendatensätze, die zu einer Durchführung eines konkreten Dienstes gehören und muss daher in die Gebührendatensätze eingetragen werden, damit diese zentral miteinander in Verbindung gebracht werden können.

Eines der zentralen Probleme der beschriebenen korrelationsbasierten Gebührenerfassung ist die durchzuführende Verteilung der Korrelationskennung an alle beteiligten Netzelemente. Die Netzelemente können auf unterschiedlichen Netzschichten, wie beispielsweise auf einem sogenannten Layer 2,3 oder 7 arbeiten und dabei auch in verschiedenen Netzbereichen bzw. -domänen, wie beispielsweise in einer sogenannten PS(Packet Switched)-Domäne oder in einem sogenannten IMS (IP Multimedia Subsystem). Ferner ist es denkbar, dass die bei der Durchführung eines Dienstes beteiligten Netzelemente auch durch Technologiegrenzen von einander getrennt sind. So können die Netzelemente zum Beispiel auf UMTS (Universal Mobile Telecommunications System) oder WLAN (Wireless Local Area Network) basieren. In einem derartigen heterogenen Umfeld muss für jeden neuen Dienst ein Mechanismus zur Verteilung der Korrelationskennung definiert und anschließend standardisiert werden. Bedingt durch dieses Vorgehen, ist eine schnelle und flexible Einführung neuer Dienste nicht gewährleistet. Aufgrund des dargestellten Problems konnte der sogenannte MMS (Multi Media Service)- Dienst für Pre-Paid Teilnehmer lange Zeit aufgrund fehlender Gebührenmethoden nicht angeboten werden. Die bereits existierende Komplexität bei der Gebührenermittlung wird bei den neuen verteilten Netzarchitekturen derart gesteigert, dass eine Gebührenerfassung mit den gegenwärtigen beschriebenen Methoden zukünftig nicht mehr beherrschbar sein wird.

Ein weiteres Problem stellt die Ineffizienz der existierenden Verfahren dar. Bisher werden Gebührendaten in allen beteiligten Netzelementen gesammelt und die resultierenden Gebührendatensätze an eine zentrale Stelle weitergeleitet. Diese zentrale Stelle muss aus einer Datenflut die zusammengehörigen Gebührendatensätze finden. Anschießend werden die wichtigen Gebührendatensätze ausgewertet und die restlichen Datensätze verworfen.

Es war nunmehr eine Aufgabe der vorliegenden Erfindung eine Anordnung bereitzustellen, mit deren Hilfe es möglich wird, dienstorientierte Gebührendaten für einen Dienst in einem Kommunikationsnetz möglichst einfach, effizient und schnell erstellen zu können.

Gelöst wird diese Aufgabe durch eine erfindungsgemäße Anordnung gemäß Anspruch 1. Weitere vorteilhafte Ausführungsformen der erfindungsgemäßen Anordnung werden in den Unteransprüchen aufgeführt.

Gemäß Anspruch 1 wird eine Anordnung zum Erstellen von dienstorientierten Gebührendaten für mindestens einen Dienst in einem Kommunikationsnetz bereitgestellt, wobei die Anordnung in mindestens einem ersten Bereich, einer sogenannten Gebührenerfassungsdomäne Netzelemente zur Gebührenerfassung, im Folgenden Gebührenerfassungspunkte genannt und in mindestens einem zweiten Bereich, einer sogenannten Gebührenverarbeitungsdomäne Netzelemente zur Gebührenverarbeitung, im Folgenden Gebührenverarbeitungspunkte genannt, aufweist. Die Anordnung ist dadurch gekennzeichnet, dass die Anordnung eine Regelfunktion umfasst, die sowohl die Gebührenerfassungspunkte als auch die Gebührenverarbeitungspunkte unter Anwendung von vordefinierten Regeln steuert. Die Regelfunktion verteilt zu diesem Zweck Regeln an einzelne Gebührenprozesse, das heißt an einzelne Erfassungs- und Verarbeitungsprozesse. Unter einem Gebührenprozess ist im Rahmen der vorliegenden Erfindung dabei eine in einem Gebührenerfassungs- oder einem Gebührenverarbeitungspunkt implementierte Funktion zu verstehen. Steuern umfasst dabei das An- und Abschalten von Gebührenprozessen, sowie Anweisungen, welche Daten zu erfassen sind, und wie die erfassten Daten zu verarbeiten sind.

In einer besonders bevorzugten Ausführungsform der erfindungsgemäßen Anordnung steuert die Regelfunktion alle von der Anordnung umfassten Gebührenerfassungspunkte. Die in 3GPP definierte Regelfunktion, die sogenannte Policy Decision Function (PDF) steuert im Gegensatz dazu nur einen Zugangsnetzknoten, nämlich einen GGSN (Gateway GPRS Support Node) im GPRS-Kommunikationsnetz zur lokalen Kontrolle von Ressourcenbelegungen. Ferner ist eine Steuerung von Gebührenverarbeitungspunkten in 3 GPP generell nicht vorgesehen. Gebührenverarbeitungspunkte sind dabei beispielsweise Sammel- und Korrelationsfunktionen, sogenannte Tarifierungsfunktionen, Kredit- bzw. Debet-Überwachungsfunktionen und Kontoverwaltungsfunktionen. Darüber hinaus kann es sich aber auch um Dienst- und/oder Zugangs-Autorisierungsfunktionen handeln, so wie dies z. B. auch in der Druckschrift WO 2004/036 890 offenbart wird. Vorzugsweise ist die Regelfunktion der erfindungsgemäßen Anordnung so ausgestaltet, dass die Regelfunktion alle Gebührenprozesse des mindestens einen Dienstes steuert. Gebührenprozesse von verschiedenen Diensten werden vorzugsweise für jeden Dienst von der Regelfunktion jeweils separat gesteuert. In dieser bevorzugten Ausführungsform der erfindungsgemäßen Anordnung hat die Regelfunktion Zugriff auf Teilnehmerdaten, Dienstdaten und Tarifdaten.

In einer weiteren bevorzugten Ausführungsform der erfindungsgemäßen Anordnung ist die Regelfunktion derart ausgestaltet, dass sie eine während der Durchführung des mindestens einen Dienstes simultan erfolgende den Dienst betreffende Gebührenerfassung steuern kann.

Vorzugsweise kann die Regelfunktion darüber hinaus auch eine simultane Überwachung von vordefinierten den Dienst betreffende Gebührenschwellwerten steuern.

In einer anderen bevorzugten Ausführungsform der erfindungsgemäßen Anordnung hat die Regelfunktion eine Schnittstelle zu einem den mindestens einen Dienst erbringenden Dienstrechner. Über diese Schnittstelle kann eine wechselseitige Steuerung erfolgen.

Ferner ist es im Rahmen der vorliegenden Erfindung denkbar, dass die Regelfunktion je eine Schnittstelle zu den zu steuernden Netzelementen aufweist, über welche jeweils die zur Steuerung angewandten Regeln verteilt werden. Das bedeutet, dass jedes zu steuernde Netzelement unmittelbar von der Regelfunktion kontaktiert bzw. unter Anwendung entsprechender Regeln gesteuert wird.

In einer anderen bevorzugten Ausführungsform der erfindungsgemäßen Anordnung weist die Regelfunktion eine Schnittstelle zur Weitergabe der zur Steuerung angewandten Regeln zu einem der zu steuernden Netzelemente auf, von wo eine Weitergabe an die verbleibenden zu steuernden Netzelemente erfolgt. Das bedeutet, dass die Regeln von Netzelement zu Netzelement sukzessive weitergeleitet werden.

Die erfindungsgemäße Anordnung macht eine zentrale und gleichzeitig dynamische Steuerung von Gebührenvorgängen bei Nutzung eines Dienstes in einem Kommunikationsnetz möglich. Die erfindungsgemäß vorgesehene Regelfunktion in der erfindungsgemäßen Anordnung verfügt über Regeln, anhand welcher eine Steuerung erfolgen soll und kann diese an entsprechende Gebührenerfassungs- und Gebührenverarbeitungspunkte leiten. Durch die zentrale Position der Regelfunktion ist eine einfache und effiziente Steuerung möglich.

Weitere Vorteile der erfindungsgemäßen Anordnung werden anhand der folgenden Figur näher erläutert. Es zeigt

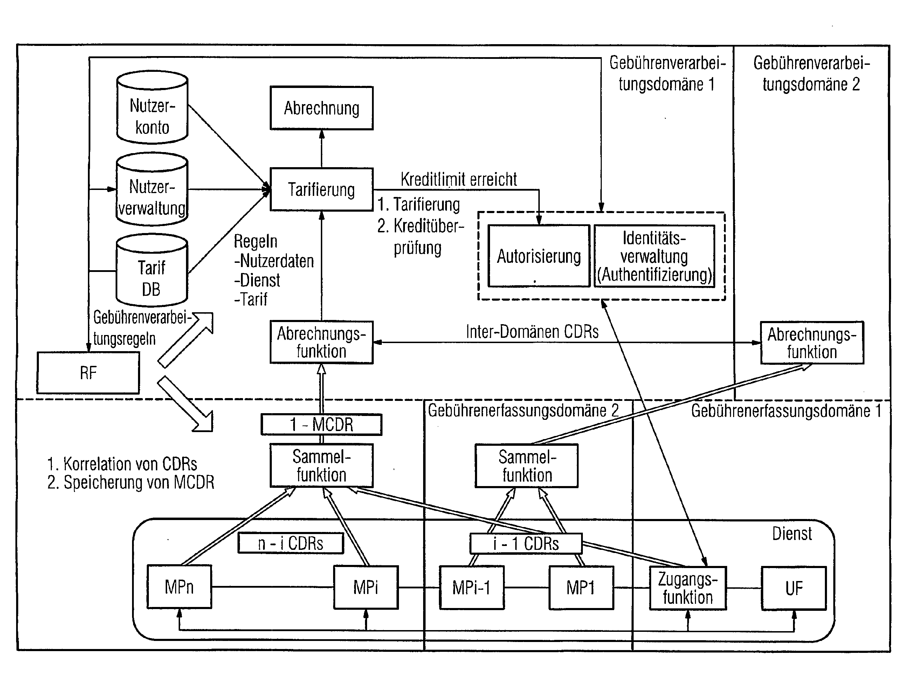

Fig. 1 Schematische Darstellung einer Ausführungsform einer erfindungsgemäßen Anordnung.

In Figur 1 ist eine Anordnung aufgezeigt, die verschiedene Bereiche eines Kommunikationsnetzes umfasst. Gezeigt sind zwei Gebührenverarbeitungsdomänen 1 und 2 und zwei Gebührenerfassungsdomänen 1 und 2 eines Kommunikationsnetzes. Es soll ein Dienst (Service) erbracht werden, bei dessen Durchführung für einen Nutzer UF (Nutzerfunktion) mehrere Domänen des Kommunikationsnetzes involviert sind. Das bedeutet beispielsweise, dass eine Übertragung von Daten zur Erbringung des Dienstes über mehrere Netzelemente erfolgt, in welchen jeweils Gebührenerfassungspunkte, sogenannte Metering Points MPs implementiert sind. Ferner ist eine Regelfunktion RF vorgesehen, die auf beide Arten von Bereichen steuernd eingreifen kann, was durch die fett gekennzeichneten Pfeile und den Ausdruck "Gebührenverarbeitungsregeln" kenntlich gemacht werden soll. Die einzelnen Gebührenerfassungspunkte (MPs - d.h.: MPn....MP 1) des Dienstes können von der Regelfunktion RF derart gesteuert werden, das diese entweder Daten erfassen oder nicht. Eine Erfassung und Speicherung von Daten erfolgt auf Gebührendatensätzen, sogenannten CDRs - Charging Data Records. Ferner wird Ihnen seitens der Regelfunktion mitgeteilt, an welche Stellen die Ergebnisse, das heißt die CDRs zu übertragen sind. Die CDRs werden dadurch in einer in der jeweiligen Gebührenerfassungsdomäne angeordneten spezifischen Sammelfunktion gesammelt und auf einer sogenannten Master Charging Data Record (MCDR), das heißt einer Art Zusammenfassung mehrerer CDRs gespeichert und seitens der Sammelfunktion einer Abrechnungsfunktion zugeleitet, die sich in einer der jeweiligen Gebührenerfassungsdomäne zugeordneten Gebührenverarbeitungsdomäne befindet. Sind dabei mehrere Abrechnungsfunktionen aufgrund eines sich über mehrere Domänen erstreckenden Szenarios involviert, müssen diese Abrechnungsfunktionen zum Austausch und zur Verarbeitung der gesammelten Daten bzw. CDRs eine Inter-Domänen Signalisierung vornehmen.

## Patentansprüche

1. Anordnung zum Erstellen von dienstorientierten Gebührendaten für mindestens einen Dienst in einem Kommunikationsnetz, wobei die Anordnung in mindestens einem ersten Bereich (Gebührenerfassungsdomäne) Netzelemente zur Gebührenerfassung - Gebührenerfassungspunkte - und in mindestens einem zweiten Bereich (Gebührenverarbeitungsdomäne) Netzelemente zur Gebührenverarbeitung - Gebührenverarbeitungspunkte - aufweist,
**dadurch gekennzeichnet,**
**dass** die Anordnung eine Regelfunktion umfasst, die sowohl die Gebührenerfassungspunkte als auch die Gebührenverarbeitungspunkte unter Anwendung von vordefinierten Regeln steuert.

2. Anordnung nach Anspruch 1,
**dadurch gekennzeichnet,**
**dass** die Regelfunktion alle von der Anordnung umfassten Gebührenerfassungspunkte steuert.

3. Anordnung nach Anspruch 1 oder 2,
**dadurch gekennzeichnet,**
**dass** die Regelfunktion alle Gebührenprozesse des mindestens einen Dienstes und Gebührenprozesse von verschiedenen Diensten für jeden Dienst jeweils separat steuert.

4. Anordnung nach einem der vorhergehenden Ansprüche,
**dadurch gekennzeichnet,**
**dass** die Regelfunktion eine während der Durchführung des mindestens einen Dienstes simultan erfolgende den Dienst betreffende Gebührenerfassung steuert.

5. Anordnung nach Anspruch 4,
**dadurch gekennzeichnet,**
**dass** die Regelfunktion eine simultane Überwachung von vordefinierten den Dienst betreffende Gebührenschwellwerten steuert.

6. Anordnung nach einem der vorhergehenden Ansprüche,
**dadurch gekennzeichnet,**
**dass** die Regelfunktion eine Schnittstelle zu einem den mindestens einen Dienst erbringenden Dienstrechner hat.

7. Anordnung nach einem der vorhergehenden Ansprüche,
**dadurch gekennzeichnet,**
**dass** die Regelfunktion je eine Schnittstelle zu den zu steuernden Netzelementen aufweist, über welche jeweils die zur Steuerung angewandten Regeln verteilt werden.

8. Anordnung nach einem der Ansprüche 1 bis 6,
**dadurch gekennzeichnet,**
**dass** die Regelfunktion eine Schnittstelle zur Weitergabe der zur Steuerung angewandten Regeln zu einem der zu steuernden Netzelemente aufweist, von wo eine Weitergabe an die verbleibenden zu steuernden Netzelemente erfolgt.

9. Regelfunktion, die als Teil einer Anordnung nach einem der Ansprüche 1 bis 8 sowohl Gebührenerfassungspunkte als auch Gebührenverarbeitungspunkte der Anordnung unter Anwendung von vordefinierten Regeln steuern kann.

## Claims

1. Arrangement for generating service-related call charging data for at least one service in a communication network, wherein the arrangement has network elements for registering charges - charge metering points - in at least one first area (Charge metering domain) and network elements for charging - charge processing points - in at least one second area (Charge processing domain),
**characterised in that**
the arrangement includes a policy function which uses predefined rules for controlling both the charge metering points and the charge processing points.

2. Arrangement according to claim 1,
**characterised in that**
the policy function controls all the charge metering points encompassed by the arrangement.

3. Arrangement according to claim 1 or 2,
**characterised in that**
the policy function controls all charging processes of the at least one service and charging processes of different services in each case separately for each service.

4. Arrangement according to one of the preceding claims,
**characterised in that**
the policy function controls charge metering relating to the at least one service and taking place simultaneously during the provisioning of the at least one service.

5. Arrangement according to claim 4,
**characterised in that**
the policy function controls a simultaneous monitoring of predefined call charge thresholds relating to the service.

6. Arrangement according to one of the preceding claims,
**characterised in that**
the policy function has an interface to a service computer providing the at least one service.

7. Arrangement according to one of the preceding claims,
**characterised in that**
the policy function has an interface to each of the network elements that are to be controlled, via which interface the rules used for controlling purposes are distributed in each case.

8. Arrangement according to one of claims 1 to 6,
**characterised in that**
the policy function has an interface for forwarding the rules used for controlling purposes to one of the network elements that are to be controlled, from where they are forwarded to the rest of the network elements that are to be controlled.

9. Policy function which as part of an arrangement according to one of claims 1 to 8 can control both charge metering points and charge processing points of the arrangement using predefined rules.

## Revendications

1. Dispositif permettant de créer des données de taxation orientées service pour au moins un service dans un réseau de communication, le dispositif présentant, dans au moins un premier domaine (domaine d'enregistrement de taxes), des éléments de réseau pour l'enregistrement de taxes - points d'enregistrement de taxes - et dans au moins un deuxième domaine (domaine de traitement de taxes), des éléments de réseau pour le traitement de taxes - points de traitement de taxes -,
**caractérisé**
**en ce que** le dispositif comprend une fonction de règles qui commande aussi bien les points d'enregistrement de taxes que les points de traitement de taxes en utilisant des règles prédéfinies.

2. Dispositif selon la revendication 1,
**caractérisé**
**en ce que** la fonction de règles commande tous les points d'enregistrement de taxes englobés par le dispositif.

3. Dispositif selon la revendication 1 ou 2,
**caractérisé**
**en ce que** la fonction de règles commande tous les processus de taxation de l'au moins un service et des processus de taxation de différents services, respectivement séparément pour chaque service.

4. Dispositif selon l'une quelconque des revendications précédentes,
**caractérisé**
**en ce que** la fonction de règles commande un enregistrement de taxes concernant le service ayant lieu simultanément pendant l'exécution de l'au moins un service.

5. Dispositif selon la revendication 4,
**caractérisé en ce**
**que** la fonction de règles commande un contrôle simultané de valeurs seuil de taxation prédéfinies concernant le service.

6. Dispositif selon l'une quelconque des revendications précédentes,
**caractérisé en ce**
**que** la fonction de règles a une interface vers un ordinateur de service fournissant l'au moins un service.

7. Dispositif selon l'une quelconque des revendications précédentes,
**caractérisé en ce**
**que** la fonction de règles présente respectivement une interface vers les éléments de réseau à commander, par l'intermédiaire desquels les règles appliquées pour la commande sont respectivement réparties.

8. Dispositif selon l'une quelconque des revendications 1 à 6,
**caractérisé en ce**
**que** la fonction de règles présente une interface pour l'acheminement des règles appliquées pour la commande vers l'un des éléments de réseau à commander, d'où un transfert aux éléments de réseau restants à commander est réalisé.

9. Fonction de règles qui, en tant que partie d'un dispositif selon l'une des revendications 1 à 8, peut commander aussi bien les points d'enregistrement de taxes que les points de traitement de taxes du dispositif en utilisant des règles prédéfinies.
